# EUROPÄISCHE PATENTSCHRIFT

(11) **EP 1 145 407 B1**
(45) Veröffentlichungstag und Bekanntmachung des Hinweises auf die Patenterteilung: **13.07.2011**
(21) Anmeldenummer: 00963974.1
(22) Anmeldetag: 07.09.2000
(51) Int. Cl.: H02K 1/22

(54) **KLAUENPOLMASCHINE**
CLAW POLE GENERATOR
GENERATEUR A POLES A GRIFFES

(30) Priorität: 23.10.1999 DE 19951115
(43) Veröffentlichungstag der Anmeldung: 17.10.2001
(73) Patentinhaber: ROBERT BOSCH GMBH, 70442 Stuttgart (DE)
(72) Erfinder: SHENDI, Alexander, 71679 Asperg (DE); DEBARD, Jérome, Cardiff CF5 1EP (GB); BRIAND, Sylvian, Magor NP6 3PH (GB)
(86) Internationale Anmeldenummer: PCT/DE2000/003092
(87) Internationale Veröffentlichungsnummer: WO 2001/031762

(56) Entgegenhaltungen:
- EP-A- 0 991 162
- DE-A- 19 802 786
- DE-A- 19 806 667
- FR-A- 2 786 624
- US-A- 5 747 913
- PATENT ABSTRACTS OF JAPAN vol. 1999, no. 09, 30. Juli 1999 (1999-07-30) & JP 11 098787 A (HITACHI LTD), 9. April 1999 (1999-04-09)
- PATENT ABSTRACTS OF JAPAN vol. 1998, no. 08, 30. Juni 1998 (1998-06-30) -& JP 10 066286 A (HITACHI LTD), 6. März 1998 (1998-03-06)

## Beschreibung

### Stand der Technik

Die Erfindung geht von einer elektrischen Maschine gemäß des Oberbegriffs des Anspruchs 1 aus.

Elektrische Maschinen der angesprochenen Art, insbesondere Klauenpolgeneratoren, sind allgemein bekannt. Aus der US-PS 57 47 913 ist eine elektrische Maschine in Form eines Generators mit einem Rotor in Klauenpolbauweise mit Permanentmagneten bekannt. Die dort offenbarten Permanentmagneten sind in Zwischenräumen zweier benachbarter gegenpoliger, klauenförmiger Pole aufgenommen. Die Aufnahme der Permanentmagnete ist derart, daß die klauenförmigen Pole in axialer Richtung ein im wesentlichen T-förmiges Profil mit Überständen aufweisen. Im Montagezustand befinden sich die Permanentmagnete unterhalb der Überstände der T-förmigen Querschnitte der Pole, so daß eine Zentrifugallast, die bei Rotation des Rotors von den Permanentmagneten ausgeht, auf die Überstände der Pole wirkt und von diesen dort aufgenommen wird.

Nachteil dieser dort offenbarten Aufnahme für die Permanentmagnete ist, daß der Abstand zwischen zwei aufeinanderfolgenden gegenpoligen Polen durch die Überstände der T-förmigen Querschnitte verringert und so der Streufluß zwischen zwei benachbarten gegenpoligen Überständen erhöht ist. Die Erhöhung des Streuflusses steht im Gegensatz zur Anwendung von Permanentmagneten, die dem Streufluß entgegenwirken sollen.

### Vorteile der Erfindung

Bei der erfindungsgemäßen elektrischen Maschine, insbesondere Generator beziehungsweise Klauenpolgenerator für Kraftfahrzeuge mit den kennzeichnenden Merkmalen des Anspruchs 1 ist es demgegenüber möglich, Permanentmagnete in den Zwischenraum zwischen zwei benachbarten gegenpoligen klauenförmigen Polen einzubringen, ohne den Abstand zwischen zwei gegenpoligen Polen zu verringern. Um dies zu erreichen, sind in die Zwischenräume zwischen den abwechselnden Polen Permanentmagnete eingesetzt, die jeweils mittels eines, insbesondere magnetisch nicht erregbaren, Halteelements gehalten sind. Das Halteelement selbst ist beidseitig in Nuten gehalten, wobei eine Nut längsseitig in einen magnetischen Nordpol und eine Nut längsseitig in einem benachbarten magnetischen Südpol eingearbeitet ist.

Durch die in den Unteransprüchen aufgeführten Maßnahmen ergeben sich vorteilhafte Weiterbildungen und Verbesserungen der im Hauptanspruch angegebenen Merkmale.

Durch die Verwendung eines verhältnismäßig dünnen Halteelements, das sich dadurch leicht verformen kann, ist die Flächenpressung zwischen Permanentmagnet und Halteelement unter Rotationsbelastung gering. Darüber hinaus sichert das Halteelement den Permanentmagneten sowohl in seiner radialen als auch in seiner axialen Lage im Rotor. Eine Möglichkeit, die Permanentmagnete gegenüber dem jeweiligen Halteelement axial zu sichern, besteht darin, daß von einem Basisbereich des Halteelements Laschen abgebogen sind, die die axiale Bewegung beschränken. Dabei ist es möglich, daß die abgebogenen Laschen auf axiale Stirnflächen des eingesetzten Permanentmagneten eine Klemmkraft ausüben. Werden von verlängerten abgebogenen Laschen Endbereiche so abgewinkelt, daß der Permanentmagnet zumindest teilweise umfaßt ist, ist es möglich, den Permanentmagneten durch die Laschen in axialer Richtung und andererseits den Permanentmagneten zwischen Basisbereich und Endbereichen festzuklemmen.

Eine weitere Möglichkeit besteht darin, den Permanentmagneten an einen lediglich im wesentlichen ebenen Basisbereich des Halteelements mittels eines Klebstoffs festzukleben. Auch dadurch wird sowohl eine axiale, als auch radiale Festlegung des Permanentmagneten erreicht.

Ein Einschieben des Basisbereichs mit dem Permanentmagneten in die Nuten wird vereinfacht, wenn der Basisbereich des Halteelements an mindestens einem axialen Ende verjüngt ist. Ein Festlegen der axialen Lage des Halteelements mit dem Permanentmagneten im Rotor ist auf einfache Weise dadurch möglich, daß an jedem axialen Ende der Baugruppe mindestens eine der Nuten in ihrem Querschnitt durch Verstemmen verengt ist. Beide Flanken eines jeden klauenförmigen Pols sind derart zu bearbeiten, daß die Nuten eine genau festgelegte Position einnehmen.

Die Bearbeitung der nord- und südpoligen Polflanken der von je einer Polradscheibe ausgehenden nord- und südpoligen Klauenpole wird dadurch vereinfacht, daß der Stator oder Rotor an axial nach außen gerichteten Stirnseiten der Polradscheibe mit gleichem Winkelabstand beabstandete Bezugselemente aufweist. Diese Bezugselemente ermöglichen ein Ausrichten der Pole in Bezug zu einem Werkzeug, zum Beispiel einem Nutwerkzeug.

### Zeichnungen

Die Erfindung wird nachstehend in Ausführungsbeispielen anhand der zugehörigen Zeichnungen näher erläutert. Es zeigen:
Figur 1 eine perspektivische Darstellung eines Rotors eines Klauenpolgenerators,
Figur 2 eine perspektivische Darstellung eines erfindungsgemäßen Halteelements in einem ersten Ausführungsbeispiel,
Figur 3 einen Permanentmagneten, wie er für das in Figur 2 gezeigte Halteelement vorgesehen ist,
Figur 4 die vormontierte Baugruppe, gebildet aus Halteelement und Permanentmagnet,
Figur 5 die in Figur 4 gezeigte Baugruppe in einer geringfügigen Abwandlung,
Figur 6 die Baugruppe aus Figur 4 in Seitenansicht,
Figur 7 eine perspektivische Darstellung eines zweiten Ausführungsbeispiels einer Baugruppe,
Figur 8 ein drittes Ausführungsbeispiel der Baugruppe,
Figur 9 eine perspektivische Darstellung der Baugruppe nach dem ersten Ausführungsbeispiel und die Anordnung zu den Polnuten unmittelbar vor der Montage und
Figur 10 nach vollendeter Montage,
Figur 11 einen Schnitt nach Linie XI-XI in Figur 10,
Figur 12 eine perspektivische Darstellung eines bekannten Klauenpolgenerators.

### Beschreibung der Ausführungsbeispiele

### Identische beziehungsweise gleichwirkende Bauteile sind mit gleichen Bezugszahlen bezeichnet.

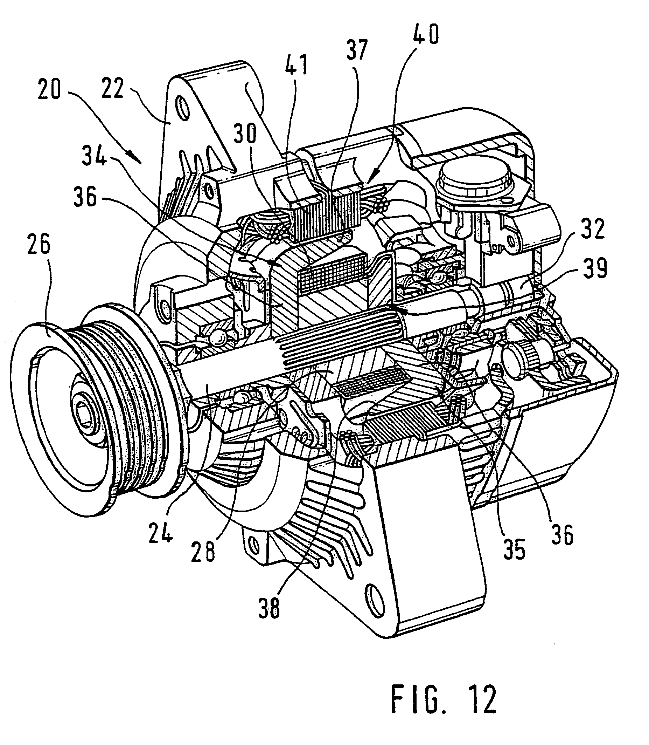

Zum besseren Verständnis der Erfindung ist in Figur 12 der allgemeine Aufbau eines bekannten Klauenpolgenerators gezeigt, wobei lediglich auf die wesentlichen Bauteile eingegangen ist. Der Klauenpolgenerator 20 weist ein Gehäuse 22 auf, in dem eine Antriebswelle 24 gelagert ist. Am außerhalb des Gehäuses 22 liegenden Ende der Antriebswelle 24 ist eine Riemenscheibe 26 angebracht, über die die Antriebswelle 24 mit einem Polkern 28, beispielsweise über einen Keilriemen, angetrieben wird. Innerhalb des Gehäuses 22 ist auf der Antriebswelle 24 eine Erregerwicklung 30 drehfest aufgebracht und über ebenfalls auf der Antriebswelle 24 aufgebrachte Schleifringe 32 mit einem verhältnismäßig kleinen Erregerstrom bestromt. Die Erregerwicklung 30 ist seitlich von einer antriebsseitigen Polradhälfte 34 und einer bürstenseitigen Polradhälfte 35 umgeben. Die antriebsseitige Polradhälfte 34 setzt sich aus einer senkrecht zur Antriebswelle 24 verlaufenden Polradscheibe 36 und längs zur Antriebswelle 24 verlaufenden klauenförmigen Polen 37 zusammen. Die bürstenseitige Polradhälfte 35 setzt sich ebenfalls aus einer senkrecht zur Antriebswelle 24 verlaufenden Polradscheibe 36 und längs zur Antriebswelle 24 verlaufenden klauenförmigen Polen 38 zusammen. Jede der Polradhälften 34 und 35 weist eine Vielzahl dieser in Umfangsrichtung gleichmäßig zueinander beabstandeten Pole 37, 38 auf, wobei die Anzahl vom Anwendungszweck des Generators abhängt.

Die Antriebswelle 24 bildet mit den Polradhälften 34 und 35, dem Polkern 38 und der Erregerwicklung 30 einen Rotor 39.

Aus der Figur 12 ist zu entnehmen, daß die Pole 37 und 38 der sich gegenüberliegenden Polradhälften 34 und 35 ineinandergreifen, so daß sich in Umfangsrichtung des Polrads gesehen bei bestromter Erregerwicklung 30 abwechselnd magnetische Süd- und Nordpole ausbilden.

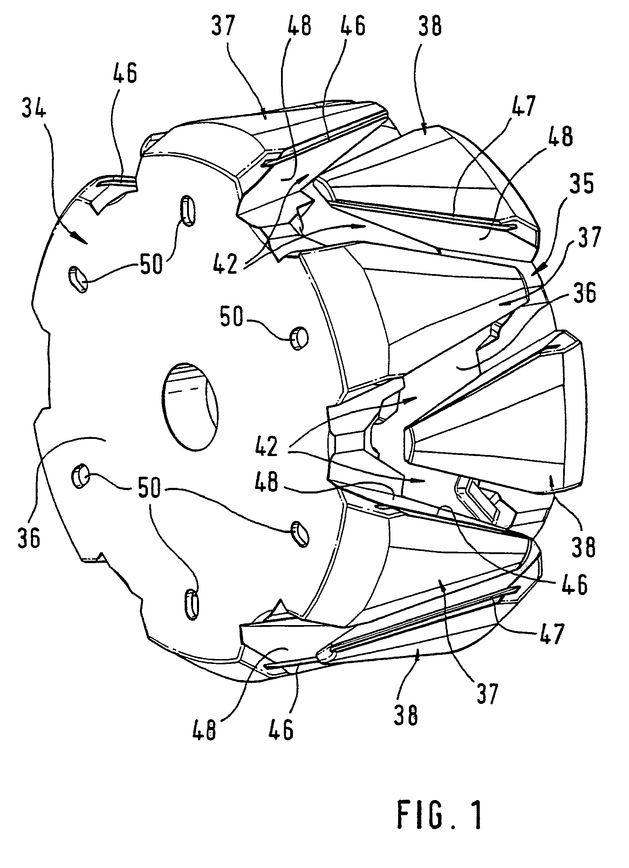

Radial beabstandet zu den Polen 37 und 38 der beiden Polradhälften 34 und 35 ist ein feststehender Ständer 40 angeordnet, der beispielsweise eine dreiphasige Ständerwicklung 41 aufweist. Der Ständer 40 besteht aus gegeneinander isolierten, mit Nuten versehenen Blechen, die zu einem festen Blechpaket zusammengepreßt sind. In die Nuten sind in Figur 1 teilweise zu erkennende Windungen der Ständerwicklung 41 eingebettet. Im Betrieb stellt sich ein magnetischer Fluß ein, der vom Kern der Erregerwicklung 30, dem sogenannten Polkern 28 über die Polradscheibe 36 und die Pole 38 einer Polradhälfte 34 zum Ständer 40 verläuft und von dort in die benachbarten Pole 37 der anderen Polradhälfte 35 und über die Polradscheibe 36 zum Polkern 28, womit sich der magnetische Kreis wieder schließt. Bei herkömmlichen Generatoren tritt dabei ein beachtlicher Streufluß in Zwischenräumen 42 zwischen zwei benachbarten Polen 37 und 38 auf.

Zur Vermeidung beziehungsweise Verringerung dieses Streuflusses ist beabsichtigt, in diesen Zwischenraum Permanentmagnete 43 einzubringen, die dem Streufluß entgegenwirken.

In Figur 1 sind die beiden Polradhälften 34 und 35 in ihrer Einbaulage im Klauenpolgenerator 20 zueinander dargestellt. Es sind dabei die beiden gleichachsig gegenüberliegenden Polradscheiben 36 mit ihren in diesem Fall jeweils insgesamt sechs Polen 37 und 38 zu erkennen. Die Pole 37 der einen Polradhälfte 34 befinden sich in den Lücken zwischen zwei Polen 38 der Polradhälfte 35.

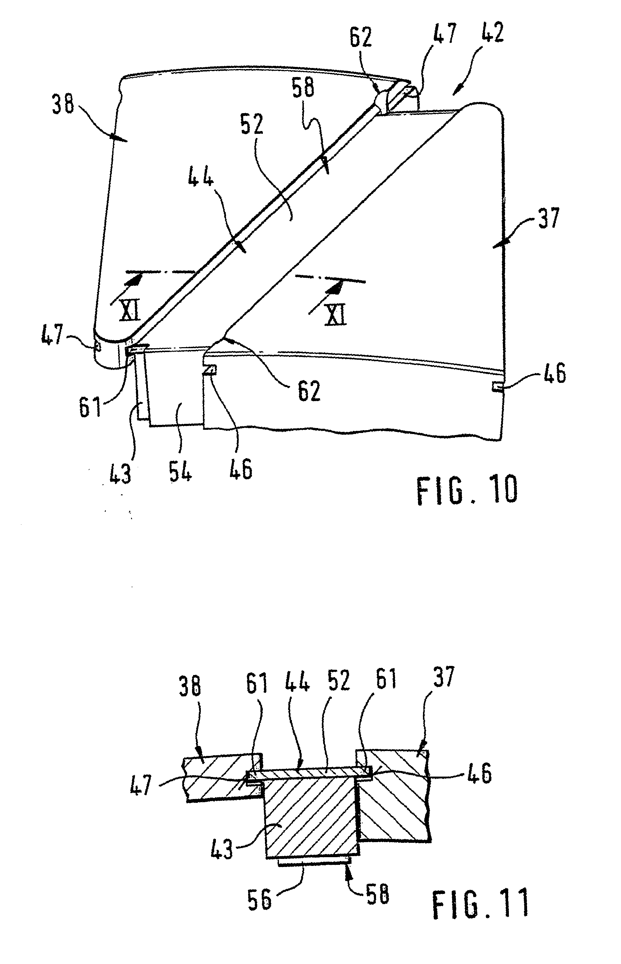

In die dabei entstehenden Zwischenräume 42 zwischen je einem Pol 37 der Polradhälfte 34 und einem Pol 38 der Polradhälfte 35 werden Permanentmagnete 43 über magnetisch nicht erregbare Halteelemente 44 angeordnet, siehe auch Figur 10. Die Halteelemente 44 werden dabei in sich am Umfang gegenüberliegende Polnuten 46 und 47 eingeschoben. Die Polnuten 46 und 47 sind dabei, wie in Figur 1 gut erkennbar, von Flanken 48 der Pole 37 und 38 ausgenommen.

Damit alle linksseitigen beziehungsweise rechtsseitigen Flanken 48 einer jeden Polradhälfte 34 beziehungsweise 35 untereinander den gleichen Winkelabstand nach einer Bearbeitung der Flanken 48 durch ein Werkzeug haben, ist es von Vorteil, wenn der Stator 40 der elektrischen Maschine oder, wie in Figur 1, eine jede Polradhälfte 34 beziehungsweise 35 an ihren axial nach außen gerichteten Stirnseiten mit gleichem Winkelabstand beabstandete Bezugselemente 50 aufweisen. An diesen Bezugselementen 50, die vorzugsweise Ausnehmungen sind, lassen sich die Polradhälften 34 und damit die klauenförmigen Pole 37 und 38 in Bezug zu dem flankenbearbeitenden Werkzeug orientieren. Der Abstand der Bezugselemente 50 ist vorzugsweise so groß, wie der Quotient aus 360 Winkelgraden und der Anzahl der Pole 37 beziehungsweise 38 je Stirnseite einer Polradhälfte 34 beziehungsweise 35. Die Bezugselemente 50 können zum Beispiel sogenannte Langlöcher sein.

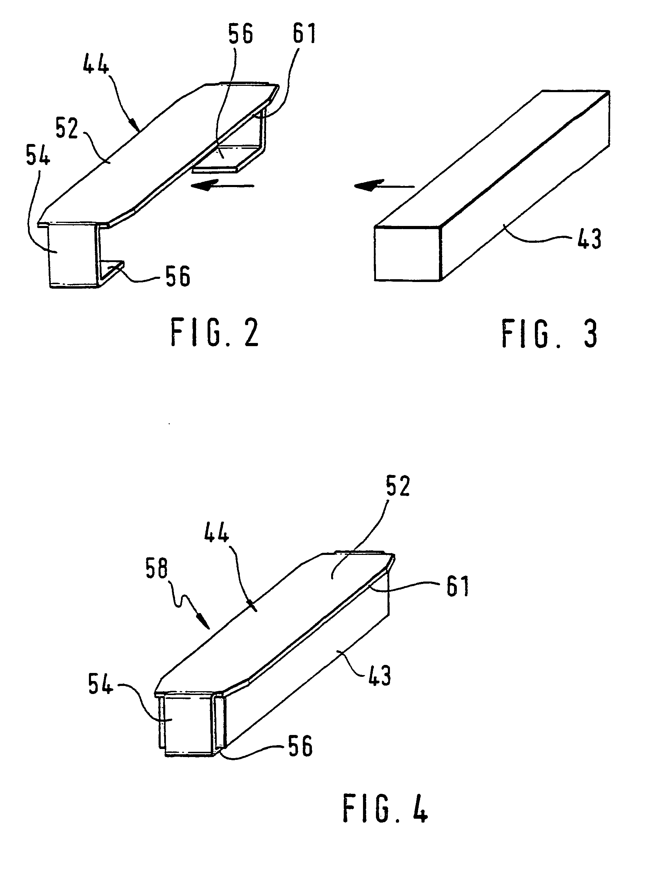

In Figur 2 ist ein erstes Ausführungsbeispiel des Halteelements 44 dargestellt. Das Halteelement 44 wird aus einem Basisbereich 52 gebildet, der an jedem axialen Ende eine Lasche 54 aufweist. Jede Lasche 54 ist dabei vom Basisbereich 52 abgewinkelt beziehungsweise abgebogen. An jedem dem Basisbereich 52 abgewandten Ende der Laschen 54 befindet sich ein ebenso abgewinkelter beziehungsweise abgebogener Endbereich 56. Die Endbereiche 56 der Laschen 54 weisen dabei Flächen auf, die dem Basisbereich 52 zugewandt sind. Das in Figur 2 dargestellte Halteelement 44 weist einen Basisbereich 52 auf, der an beiden axialen Enden verjüngt ist. Diese Verjüngungen erleichtern das Einschieben des Halteelements 44 in die Polnuten 46 und 47 der Pole 37 und 38. Vorteilhafterweise ist der Basisbereich 52 des Halteelements 44 an mindestens einem axialen Ende verjüngt.

In Figur 3 ist der quaderförmige Permanentmagnet 43 dargestellt, der von dem Halteelement 44 nach Figur 2 aufgenommen werden kann.

In Figur 4 ist eine vormontierte Baugruppe 58, bestehend aus dem Halteelement 44 und dem Permanentmagneten 43 gemäß des ersten Ausführungsbeispiels dargestellt. In dieser vormontierten Baugruppe 58 ist der Permanentmagnet 43 durch den Basisbereich 52, die zwei Laschen 54 und die ebenfalls zwei Endbereiche 56 größtenteils umfaßt. Dabei ist der Permanentmagnet 43 einerseits von den beiden Laschen 54 in eine axiale Richtung festgeklemmt, andererseits ist zwischen Basisbereich 52 und den beiden Endbereichen 56 der Permanentmagnet 43 festgeklemmt.

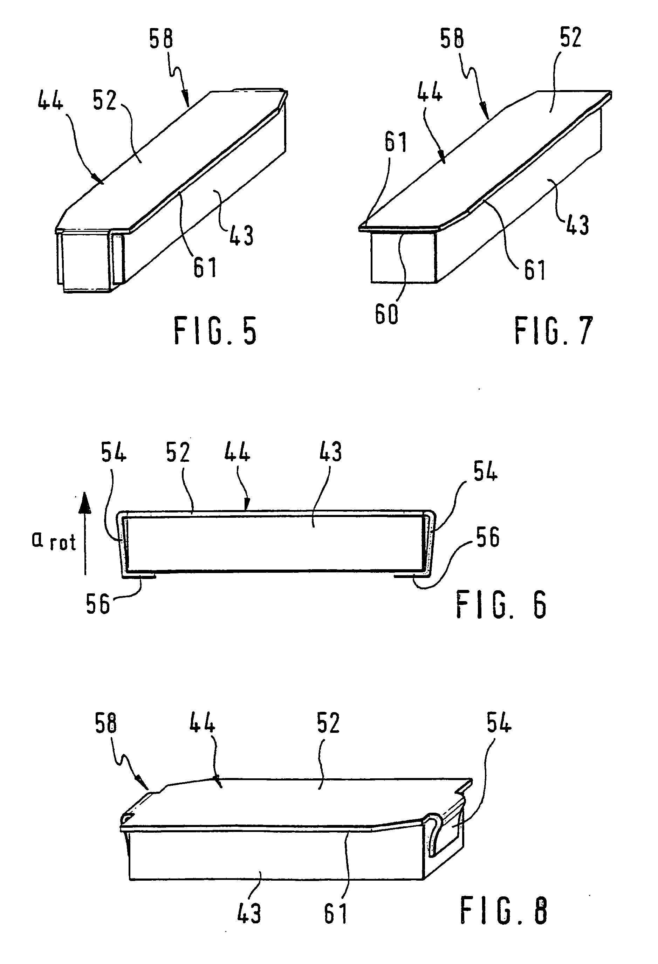

In Figur 5 ist der in Figur 4 bereits beschriebene prinzipielle Zusammenbau der Baugruppe 58 aus Halteelement 44 und dem Permanentmagneten 43 dargestellt. Im Unterschied zu Figur 4 weist der Basisbereich 52 zwar auch an beiden axialen Enden Verjüngungen auf, diese sind im Gegensatz zu Figur 4 jedoch dadurch erzielt, daß an zwei sich diagonal gegenüberliegenden Ecken des Basisbereichs 52 Schrägungen vorgesehen sind.

In Figur 6 ist eine Seitenansicht einer Baugruppe 58 aus einem Halteelement 44 und einem Permanentmagneten 43 dargestellt. Gegenüber dem bereits erwähnten ist hier wesentlich, daß zwischen den Laschen 54 und dem Basisbereich 52 jeweils spitze Winkel eingeschlossen sind. Zumindest muß das im Winkel zwischen dem Basisbereich 52 und den Laschen 54 wirkende Moment den Permanentmagneten 43 festklemmen. Wird die Baugruppe 58 im eingebauten Zustand einer Fliehbeschleunigung aᵣₒₜ ausgesetzt, so wird der Permanentmagnet 43 durch die beiden Endbereiche 56 zusätzlich gegen den Basisbereich 52 festgeklemmt.

In Figur 7 ist ein zweites Ausführungsbeispiel einer Baugruppe 58, gebildet aus einem Halteelement 44 und einem Permanentmagneten 43, dargestellt. Dabei ist der Permanentmagnet 43 mittels eines Klebstoffs 60 an den Basisbereich 52 des Halteelements 44 angeklebt.

In Figur 8 ist ein drittes Ausführungsbeispiel einer Baugruppe 58 dargestellt. Wie bereits aus dem ersten Ausführungsbeispiel bekannt, gehen vom Basisbereich 52 abgebogene Laschen 54 aus, die an beiden Enden des Permanentmagneten 43 auf diesen eine axiale Klemmkraft bewirken. Durch diese axiale Klemmkraft und die zwischen dem Permanentmagneten 43 und beiden Laschen 54 wirkende Reibung wird die Position des Permanentmagneten 43 in Bezug zum Basisbereich 52 gehalten.

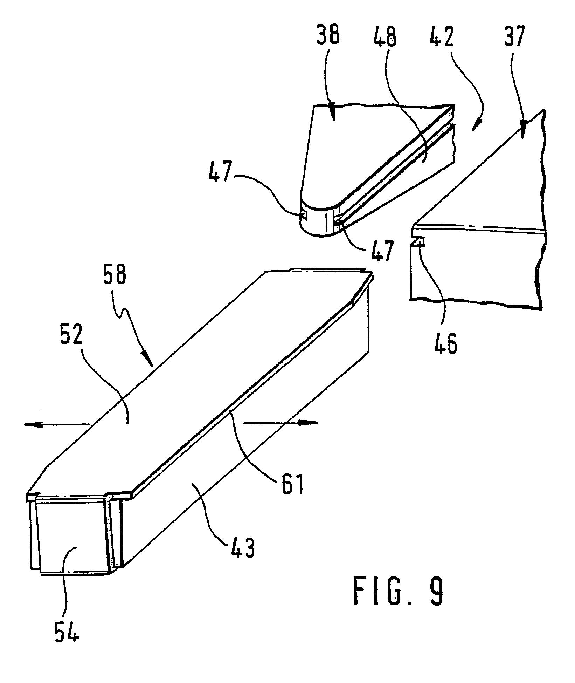

In Figur 9 ist erkennbar, wie eine Baugruppe 58, bestehend aus Halteelement 44 und Permanentmagnet 43, in einen Zwischenraum 42 zwischen den abwechselnden Polen 37 und 38 eingeschoben wird. Dabei werden die seitlichen, axial ausgerichteten, leistenförmig überstehenden Kanten 61 des Basisbereichs 52 in die Polnuten 46 und 47 eingesetzt und dabei parallel zu diesen ausgerichtet.

In Figur 10 ist dargestellt, wie die Baugruppe 58, gebildet aus dem Halteelement 44 und dem Permanentmagneten 43 sich in Einbaulage in einem Zwischenraum 42 zwischen zwei Polen 37 und 38 befindet. Der Basisbereich 52 des Halteelements 44 ist mit seinen beiden leistenförmigen Kanten 61 in die sich gegenüber befindenden Polnuten 46 und 47 eingeschoben. Damit im Betrieb die Baugruppen 58 sich nicht aus den fest zueinander angeordneten Polradhälften 34 und 35 lösen können, ist die axiale Lage der Baugruppe 58 im Zwischenraum 42 zwischen einem Nord- und einem Südpol dadurch gesichert, daß an jedem axialen Ende der Baugruppe 58 mindestens eine der Polnuten 46 und 47 in ihrem Querschnitt durch je eine Verengung 62 verengt ist. Der Permanentmagnet 43 ist dabei in radialer Richtung zum Stator 40 hin durch einen Basisbereich 52 abgedeckt.

In Figur 11 ist schließlich ein Querschnitt durch eine Baugruppe 58 dargestellt, wie sie sich nach der Montage im Rotor 39 zwischen zwei Polen 37 und 38 nach der Montage befindet. Die vom Permanentmagneten 43 ausgehende Fliehkraftbelastung wird dabei, wie leicht ersichtlich ist, auf die den Permanentmagneten abdeckenden Basisbereich 52 des Halteelements 44 übertragen. Die Fliehkraft, die vom Halteelement 44 und dem Permanentmagneten 43 ausgeht, wird wiederum über die leistenförmigen Kanten 61 des Basisbereichs 52 an die Polnuten 46 und damit an die Pole 37 und 38 der Polradhälften 34 beziehungsweise 35 übertragen. Wie für einen Fachmann leicht ersichtlich ist, ist eine solche Befestigung von Permanentmagneten 43 über ein Halteelement 44 nicht nur - wie dargelegt - bei einem Rotor 39 möglich, sondern auch bei einem Stator 40, der eine Bauart mit von am Umfang axial ausgerichteten und in Umfangsrichtung abwechselnder Polung von elektromagnetisch erregten Polen aufweist.

## Patentansprüche

1. Elektrische Maschine, insbesondere Generator für ein Kraftfahrzeug, mit einem Erregersystem aus einer Vielzahl elektrisch erregter Einzelpole im Stator (40) oder Rotor (39) in Form von am Umfang axial ausgerichteten, mit in Umfangsrichtung abwechselnd gepolten, elektromagnetisch erregten Polen (37, 38) und mit zur Verringerung des magnetischen Streuflusses in Zwischenräume (42) zwischen den abwechselnden Polen (37, 38) eingesetzte Permanentmagnete (43), wobei die Permanentmagnete (43) jeweils mittels eines magnetisch nicht erregbaren Halteelements (44) gehalten werden, das beidseitig in Polnuten (46, 47) gehalten wird, wobei eine Polnut (46) längsseitig in einem Pol (37) und eine Polnut (47) längsseitig in einem Gegenpol, dem benachbarten Pol (38) eingearbeitet ist, **dadurch gekennzeichnet, daß** das Halteelement (44) den jeweiligen Permanentmagneten (43) bei einem Rotor (39) in radialer Richtung zum Stator (40) oder bei einem Stator (40) in radialer Richtung zum Rotor (39) hin mit einem Basisbereich (52) abdeckt und an beiden sich gegenüberliegenden Enden des Basisbereichs (52) abgebogene Laschen (54) aufweist, die auf axiale Stirnflächen des eingesetzten Permanentmagneten (43) eine Klemmkraft ausüben.

2. Elektrische Maschine nach Anspruch 1, **dadurch gekennzeichnet, daß** die abgebogenen Laschen (54) an ihrem Ende je einen Endbereich (56) aufweisen, der von den Laschen (54) abgewinkelt ist und einen Permanentmagneten (43) teilweise umfaßt, wobei die Permanentmagneten (43) einerseits in axialer Richtung durch die Laschen (54) und andererseits zwischen Basisbereich (52) und Endbereichen (56) festgeklemmt sind.

3. Elektrische Maschine nach einem der vorgenannten Ansprüche, **dadurch gekennzeichnet, daß** der Basisbereich (52) des Halteelements (44) an mindestens einem axialen Ende verjüngt ist.

4. Elektrische Maschine nach einem der vorgenannten Ansprüche, **dadurch gekennzeichnet, daß** die axiale Lage jeder aus dem Halteelement (44) und dem Permanentmagneten (43) gebildeten Baugruppe im Zwischenraum (42) zwischen einem Pol (37) und einem Gegenpol, dem Pol (38) **dadurch** gesichert wird, daß an jedem axialen Ende der Baugruppe (58) mindestens eine der Polnuten (46, 47) in ihrem Querschnitt durch eine Verengung (62) aufweist.

5. Elektrische Maschine nach einem der vorgenannten Ansprüche, **dadurch gekennzeichnet, daß** der Stator (40) oder Rotor (39) an axial nach außen gerichteten Stirnseiten mit gleichem Winkelabstand beabstandete Bezugselemente (50), vorzugsweise Ausnehmungen aufweist, die ein Ausrichten der Pole (37, 38) in Bezug zu einem Werkzeug ermöglicht, wobei der Winkelabstand der Bezugselemente (50) vorzugsweise so groß ist, wie der Quotient aus 360 Winkelgraden und der Anzahl der Pole (37, 38) je Stirnseite.

## Claims

1. Electrical machine, in particular a generator for a motor vehicle, having an exciter system comprising a multiplicity of electrically excited individual poles in the stator (40) or rotor (39) in the form of electromagnetically excited poles (37, 38), which are aligned axially on the circumference and are of alternate polarity in the circumferential direction, and having permanent magnets (43) which are used to reduce the magnetic stray flux in the intermediate spaces (42) between the alternating poles (37, 38), with the permanent magnets (43) each being held by means of a holding element (44) which cannot be excited magnetically and is held on both sides in pole slots (46, 47), with one pole slot (46) being incorporated in the longitudinal side in one pole (37), and with one pole slot (47) being incorporated in the longitudinal side in an opposing pole, the adjacent pole (38), **characterized in that** the holding element (44) covers the respective permanent magnet (43) with a base area (52) in the radial direction with respect to the stator (40) in the case of a rotor (39), or in the radial direction with respect to the rotor (39) in the case of a stator (40), and has lugs (54) which are bent at both mutually opposite ends of the base area (52) and exert a clamping force on axial end surfaces of the inserted permanent magnet (43).

2. Electrical machine according to Claim 1, **characterized in that** the bent-out lugs (54) each have an end area (56) at their end, which end area (56) is angled away from the lugs (54) and partially surrounds a permanent magnet (43), with the permanent magnets (43) being firmly clamped on one side in the axial direction by the lugs (54) and on the other side between the base area (52) and the end areas (56).

3. Electrical machine according to one of the abovementioned claims, **characterized in that** the base area (52) of the holding element (44) is tapered at at least one axial end.

4. Electrical machine according to one of the abovementioned claims, **characterized in that** the axial position of each assembly which is formed from the holding element (44) and the permanent magnet (43) is secured in the intermediate space (42) between a pole (37) and an opposing pole, the pole (38), **in that** at least one of the pole slots (46, 47) has a taper (62) in its cross section at each axial end of the assembly (58).

5. Electrical machine according to one of the abovementioned claims, **characterized in that** the stator (40) or the rotor (39) has reference elements (50), preferably recesses, which are separated by the same angular interval on end faces which face axially outwards, which allows alignment of the poles (37, 38) with respect to a tool, with the angular interval between the reference elements (50) preferably being as great as the quotient of 360 angular degrees and the number of poles (37, 38) on each end face.

## Revendications

1. Machine électrique, en particulier génératrice pour véhicule automobile, dotée
d'un système d'excitateur constitué de plusieurs pôles distincts excités électriquement et disposés dans le stator (40) ou le rotor (39) sous la forme de pôles (37, 38) excités électromagnétiquement, à polarités alternées dans la direction périphérique et alignés axialement à la périphérie,
et d'aimants permanents (43) utilisés pour diminuer le flux magnétique dispersé dans les espaces intermédiaires (42) situés entre les pôles alternés (37, 38),
chacun des aimants permanents (43) étant maintenu au moyen d'un élément de retenue (44) qui ne peut être excité magnétiquement et qui est maintenu des deux côtés dans des rainures polaires (46, 47),
une rainure polaire (46) étant ménagée dans le sens de la longueur dans un pôle (37) et une rainure polaire (47) dans le sens de la longueur dans un pôle complémentaire, à savoir le pôle (38) voisin, **caractérisée en ce que**
l'élément de retenue (44) recouvre chaque aimant permanent (43) par une partie de base (52) dans la direction radiale vers le stator (40) dans le cas d'un rotor (39) et dans la direction radiale vers le rotor (39) dans le cas d'un stator (40) et présente sur les deux extrémités opposées de la partie de base (52) des pattes (54) repliées qui exercent une force de serrage sur des surfaces frontales axiales de l'aimant permanent (43) inséré.

2. Machine électrique selon la revendication 1, **caractérisée en ce que** les pattes repliées (54) présentent chacune à leur extrémité une partie d'extrémité (56) coudée par rapport à la patte (54) et qui entoure en partie un aimant permanent (43), les aimants permanents (43) étant serrés d'une part dans la direction axiale par les pattes (54) et d'autre part entre la partie de base (52) et les parties d'extrémité (56).

3. Machine électrique selon l'une des revendications précédentes, **caractérisée en ce que** la partie de base (52) de l'élément de retenue (44) se rétrécit en au moins une extrémité axiale.

4. Machine électrique selon l'une des revendications précédentes, **caractérisée en ce que** la longueur axiale de chaque module formé de l'élément de retenue (44) et de l'aimant permanent (43) est bloquée dans l'espace intermédiaire (42) situé entre un pôle (37) et un pôle complémentaire, à savoir le pôle (38), par le fait qu'au moins une des rainures polaires (46, 47) présente un rétrécissement (62) de sa section transversale à chaque extrémité axiale du module (58).

5. Machine électrique selon l'une des revendications précédentes, **caractérisée en ce que** le stator (40) ou le rotor (39) présentent sur des côtés frontaux orientés axialement vers l'extérieur des éléments de repérage (50), de préférence des découpes, écartés de la même distance angulaire et qui permettent d'aligner les pôles (37, 38) par rapport à un outil, la distance angulaire entre les éléments de repérage (50) étant de préférence égale au quotient de 360 degrés d'angle par le nombre des pôles (37, 38) sur chaque côté frontal.
